# EUROPÄISCHE PATENTSCHRIFT

(11) **EP 3 217 538 B1**
(45) Veröffentlichungstag und Bekanntmachung des Hinweises auf die Patenterteilung: **07.07.2021**
(21) Anmeldenummer: 17000337.0
(22) Anmeldetag: 06.03.2017
(51) Int. Cl.: H02P 29/024, H02P 7/285

(54) **VERFAHREN UND VORRICHTUNG ZUR ÜBERPRÜFUNG DER FUNKTION EINER ANSTEUERSCHALTUNG EINES GLEICHSTROMMOTORS**
METHOD AND DEVICE FOR TESTING THE FUNCTION OF A CONTROL CIRCUIT FOR A DC MOTOR
PROCÉDÉ ET DISPOSITIF DE CONTRÔLE DU FONCTIONNEMENT D'UN CIRCUIT DE COMMANDE D'UN MOTEUR À COURANT CONTINU

(30) Priorität: 07.03.2016 DE 102016002740
(43) Veröffentlichungstag der Anmeldung: 13.09.2017
(73) Patentinhaber: Andreas Stihl AG & Co. KG, 71336 Waiblingen (DE)
(72) Erfinder: Gurr, Kay-Steffen, 74078 Heilbronn (DE); Liebhard, Gernot, 71332 Waiblingen (DE)
(74) Vertreter: Wasmuth, Rolf

(56) Entgegenhaltungen:
- EP-A1- 2 164 169
- JP-A- H06 343 289
- US-A1- 2012 313 561

## Beschreibung

Die Erfindung betrifft ein Verfahren und eine Vorrichtung zur Überprüfung der Funktion einer elektronische Schaltglieder enthaltenden Ansteuerschaltung eines Gleichstrommotors, wobei elektrische Spannungsanschlüsse des Gleichstrommotors über die Ansteuerschaltung mit einer Versorgungsspannung einer Spannungsquelle verbunden sind und die Ansteuerschaltung zum Betrieb des Gleichstrommotors eine Betriebsspannung einstellt, wobei die Versorgungsspannung größer ist als die Betriebsspannung, und zwischen der Ansteuerschaltung und der Spannungsquelle ein Betriebsschalter zur Inbetriebnahme des Gleichstrommotors über die Ansteuerschaltung angeordnet ist.

Derartige Vorrichtungen sind bekannt. Die Versorgungsspannung einer Spannungsquelle wird über die Ansteuerschaltung entsprechend vorgegebenen Parametern auf den Gleichstrommotor geschaltet, um diesen in der Leistung und/oder der Drehzahl zu regeln. Hierzu nutzt die Ansteuerschaltung eine Regelanordnung, vorzugsweise eine sogenannte Pulsweitenmodulation, bei der dem Gleichstrommotor Spannungsimpulse variabler Breite zugeführt werden. Entsprechend der Pulsbreite der Spannungsimpulse stellt sich eine Drehzahl am Gleichstrommotor ein.

Eine Ansteuerschaltung nutzt elektronische Schaltglieder wie Transistoren, Thyristoren, MOSFET's oder dergleichen Bauteile, um in Abhängigkeit vorgegebener Parameter die Pulsweite über den gesamten Betriebsbereich des Gleichstrommotors einstellen zu können. Fällt ein elektronisches Bauteil wegen Defekt aus, können im Wesentlichen zwei Zustände auftreten. Trennt das defekte Bauteil den Stromkreis permanent, wird der Gleichstrommotor nicht mehr betrieben werden können; ist das defekte Bauteil leitend, kann sich der Gleichstrommotor auch ohne die PWM-Ansteuerung drehen, wobei die angelegte Akkuspannung ungeregelt auf den Gleichstrommotor wirkt. Die elektronische Störung der Ansteuerschaltung kann vom Benutzer nicht ohne weiteres festgestellt werden.

Die JP H06-343289 A offenbart ein Verfahren zur Überprüfung eines elektrischen Motors in einem Antiblockiersystem. Dabei wird ausgenutzt, dass ein rotierender Motor zugleich Spannungen induziert, welche ausgewertet werden können. Hierzu muss der Motor drehen, also in Betrieb genommen sein. Die vom Motor abgegriffenen Spannungen werden - während des Betriebs des Motors - mit abgespeicherten Referenzspannungen verglichen und bei Abweichungen entsprechend eingegriffen.

Die US 2012/0313561 A1 beschreibt ein Verfahren, bei dem der Elektromotor kurz bestromt wird, um anhand des Spannungspotenzials festzustellen, ob der Elektromotor und das ansteuernde Schaltelement fehlerfrei arbeiten. In einem zweiten Prüfzyklus wird - für einen längeren Zeitraum - Spannung angelegt, um aus der Amplitude des Spannungspotenzials abzuleiten, ob der Elektromotor und das Ansteuerelement ordnungsgemäß arbeiten.

Die EP 2 164 169 A1 offenbart die Ansteuerung eines elektronisch kommutierten Gleichstrommotors, dessen Potenzial an den Spulenanschlüssen gemessen und mit anderen Größen verknüpft wird, um Unregelmäßigkeiten bzw. Fehlfunktionen des drehenden Elektromotors zu erkennen.

Der Erfindung liegt die Aufgabe zugrunde, ein Verfahren und eine Vorrichtung zur Funktionsprüfung einer Ansteuerschaltung vor Inbetriebnahme eines Gleichstrommotors anzugeben, um eine elektronische Störung der Ansteuerschaltung frühzeitig zu erkennen.

Die Aufgabe wird mit einem Verfahren nach dem Anspruch 1 gelöst. Eine Vorrichtung zur Durchführung des Verfahrens ist im Anspruch 6 angegeben.

Bei dem Verfahren zur Überprüfung der Funktion einer Ansteuerschaltung eines Gleichstrommotors wird davon ausgegangen, dass das System zunächst spannungsfrei ist. Mit Einschalten des Betriebsschalters wird die Versorgungsspannung der Spannungsquelle auf die Ansteuerschaltung geschaltet, wodurch diese initialisiert wird.

Mit Beginn der Initialisierung der Ansteuerschaltung und vor einer Inbetriebnahme des Gleichstrommotors durch die Ansteuerschaltung wird auf zumindest einem Spannungsanschluss des Gleichstrommotors das dort herrschende Potential überprüft. Bei ordnungsgemäß arbeitender Ansteuerschaltung müsste das Potential gering bzw. Null sein, da der Gleichstrommotor steht und somit auch keine EMK-Generatorspannung erzeugen kann, die an den Spannungsanschlüssen abgegriffen werden kann. Liegt hingegen bei der Überprüfung ein Potential auf dem Spannungsanschluss des Gleichstrommotors an, welches oberhalb eines vorgegebenen Grenzwertes liegt, so kann von einem Fehler ausgegangen werden, da der Motor vor Ansteuerung durch die Ansteuerschaltung bereits dreht. In diesem Fall wird eine Anzeige angesteuert, um dem Benutzer die Fehlfunktion der Ansteuerschaltung anzuzeigen.

Die Überprüfung des Potentials auf dem Spannungsanschluss des Gleichstrommotors erfolgt innerhalb eines Zeitfensters, das zur Initialisierung der Ansteuerschaltung notwendig ist. Während also die Ansteuerschaltung initialisiert wird, wird das Potential auf dem Spannungsanschluss des Gleichstrommotors überprüft und ausgewertet.

Das Zeitfenster der Initialisierung liegt in einem Bereich von 5 bis 500 Millisekunden.

Um das erfindungsgemäße Verfahren auszuführen, ist vorgesehen, gleichzeitig mit dem Einschalten des Betriebsschalters eine Prüfvorrichtung zur Erfassung des Potentials auf dem Spannungsanschluss in Betrieb zu nehmen.

Der Grenzwert, unterhalb dessen von einer ordnungsgemäßen Funktion der Ansteuerschaltung ausgegangen werden kann, ist zweckmäßig von einem bei einem Start des Gleichstrommotors zulässigen Potentialverlauf auf den Spannungsanschlüssen abgeleitet. Liegt die auf einem Spannungsanschluss des Gleichstrommotors festgestellte Spannung oberhalb dieses Grenzwertes, kann davon ausgegangen werden, dass ein unzulässiger Potentialverlauf vorliegt und somit ein Fehler in der Ansteuerschaltung gegeben ist.

Als zweckmäßige Anzeige für die Fehlerhaftigkeit der Ansteuerschaltung wird eine optische Anzeige angesteuert. Eine akustische Anzeige kann zweckmäßig sein.

Die Vorrichtung zur Überprüfung der Funktion einer elektronische Schaltglieder enthaltenden Ansteuerschaltung eines Gleichstrommotors, dessen elektrische Spannungsanschlüsse über die Ansteuerschaltung mit einer Versorgungsspannung einer Spannungsquelle verbunden sind, wobei die Ansteuerschaltung zum Betrieb des Gleichstrommotors eine Betriebsspannung einstellt, und die Versorgungsspannung größer ist als die Betriebsspannung, und mit einem zwischen der Ansteuerschaltung und der Spannungsquelle angeordneten Betriebsschalter zur Inbetriebnahme der Ansteuerschaltung und des Gleichstrommotors umfasst eine Prüfvorrichtung zur Erfassung des Potentials auf dem Spannungsanschluss des Gleichstrommotors innerhalb eines Zeitfensters nach Beginn der Initialisierung der Ansteuerschaltung zu einem ersten Zeitpunkt und vor der Inbetriebnahme des Gleichstrommotors. Die Prüfvorrichtung ist mit zumindest einer Messleitung mit einem Spannungsanschluss des Gleichstrommotors verbunden und steuert eine Anzeige an, wenn das auf der Messleitung anliegende Potential innerhalb des Zeitfensters ab dem ersten Zeitpunkt der Initialisierung der Ansteuerschaltung und vor der Inbetriebnahme des Gleichstrommotors oberhalb eines vorgegebenen Grenzwertes liegt.

Zweckmäßig sind die Prüfvorrichtung und die Ansteuervorrichtung in einem gemeinsamen Gehäuse und insbesondere auf einer gemeinsamen Platine angeordnet.

Da zwischen der Spannungsquelle und dem Gleichstrommotor eine Ansteuerschaltung vorgesehen ist, die zweckmäßig nach dem Prinzip der Pulsweitenmodulation arbeitet, kann die Versorgungsspannung der Spannungsquelle größer als die zulässige Betriebsspannung des Gleichstrommotors gewählt werden.

Die von der Prüfvorrichtung angesteuerte Anzeige ist vorteilhaft eine optische Anzeige, insbesondere eine LED.

Weitere Merkmale der Erfindung ergeben sich aus den weiteren Ansprüchen, der Beschreibung und der Zeichnung, in der ein nachfolgend im Einzelnen beschriebenes Ausführungsbeispiel der Erfindung dargestellt ist. Es zeigen:
- Fig. 1: in schematischer Darstellung eine Schaltungsanordnung einer Vorrichtung zur Überprüfung der Funktion einer Ansteuerschaltung eines Gleichstrommotors,
- Fig. 2: in schematischer Darstellung ein Diagramm zur Darstellung des Verlaufs des Motorstroms und der rückwirkenden Generatorspannung (EMK - elektromagnetische Kraft) bei einer ordnungsgemäß arbeitenden Ansteuerschaltung,
- Fig. 3: eine Darstellung gemäß Fig. 2 bei fehlerhaft arbeitender Ansteuerschaltung.

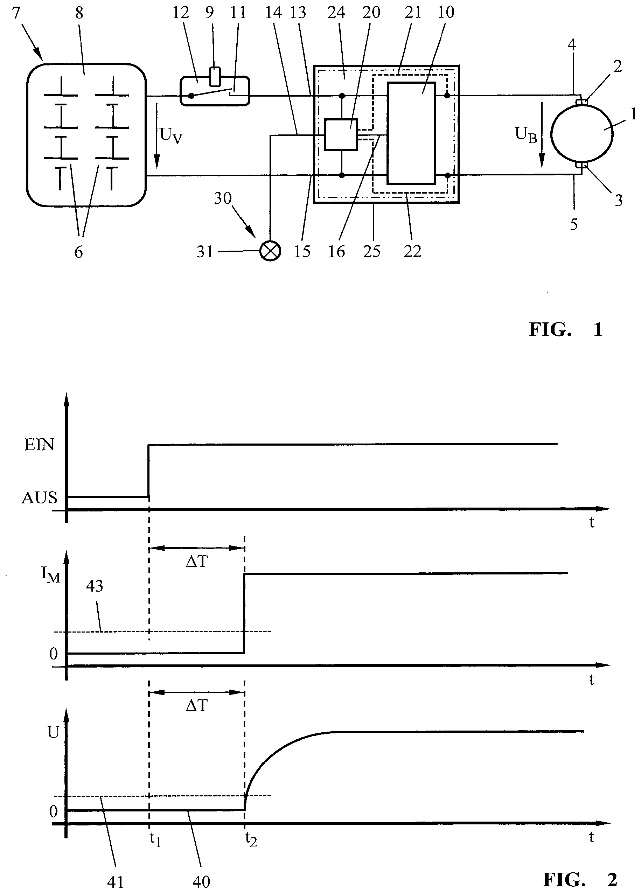

Die Schaltungsanordnung in Fig. 1 zeigt eine Vorrichtung zur Überprüfung einer Ansteuerschaltung 10 für einen Gleichstrommotor 1. Der Gleichstrommotor 1 ist ein Gleichstrommotor mit Kollektorbürsten 2, 3.

An die elektrischen Spannungsanschlüsse 4, 5, die mit den Kollektorbürsten 2, 3 verbunden sind, ist eine Betriebsspannung U_{B} angelegt. Die Betriebsspannung U_{B} wird von der Ansteuerschaltung 10 bereitgestellt, die über einen Betriebsschalter 12 mit einer Spannungsquelle 7 verbunden ist.

Die Spannungsquelle 7 ist von einem Akkupack 8 gebildet, dessen Einzelzellen 6 einen Zellverbund bilden. Die Versorgungsspannung U_{V} der Spannungsquelle 7 ist über den Betriebsschalter 12 auf die Ansteuerschaltung 10 geschaltet.

Die Ansteuerschaltung 10 arbeitet nach dem Prinzip der Pulsweitenmodulation. Die Versorgungsspannung U_{V} der Spannungsquelle 7 kann größer sein als die zulässige Betriebsspannung U_{B} des Gleichstrommotors 1. Über die Pulsweitenmodulation ist eine Einstellung der Betriebsspannung U_{B} leicht möglich. Werden bei einer derartigen PWM-Ansteuerung die Leistungsendstufen der Ansteuerschaltung leitend zerstört, dreht der Gleichstrommotor 1 auch ohne Funktion der PWM-Ansteuerung. Der Benutzer kann den Fehler ohne weiteres nicht erkennen. Im Fehlerfall kann die Betriebsspannung U_{B} auf dem Niveau der Akkuspannung liegen.

Mit Niederdrücken des Betätigungsstiftes 9 wird der Kontakt 11 des vorzugsweise als Mikroschalter ausgebildeten Betriebsschalters 12 geschlossen und die Versorgungsspannung U_{V} auf Eingangsklemmen 13, 15 der Ansteuerschaltung 10 geschaltet.

Die Schaltungsanordnung umfasst ferner eine Prüfvorrichtung 20, die mit zumindest einer Messleitung 21, 22 mit einem der Spannungsanschlüsse 4, 5 des Gleichstrommotors 1 verbunden ist. Im gezeigten Ausführungsbeispiel ist eine Messleitung 21 mit dem Spannungsanschluss 4 der Kollektorbürste 2 und eine Messleitung 22 mit dem Spannungsanschluss 5 der Kollektorbürste 3 verbunden. Die Prüfvorrichtung 20 ist über die Eingangsklemmen 13, 15 mit der Versorgungsspannung U_{V} verbunden und hat einen ersten Ausgang 14, der eine Anzeige 30 ansteuert. Im gezeigten Ausführungsbeispiel ist die Anzeige 30 eine optische Anzeige, insbesondere eine LED 31.

Über eine Signalleitung 16 ist die Prüfvorrichtung 20 mit der Ansteuerschaltung 10 verbunden.

Wie in Fig. 1 dargestellt, sind die Prüfvorrichtung 20 und die Ansteuervorrichtung 10 in einem gemeinsamen Gehäuse 25 angeordnet. Vorzugsweise sind die Ansteuerschaltung 10 und die Prüfvorrichtung 20 auf einer gemeinsamen Platine 24 angeordnet.

Die Versorgungsspannung U_{V} des Akkupacks 8 ist zweckmäßig größer als die zulässige Betriebsspannung U_{B} des Gleichstrommotors 1 vorgesehen. Der Akkupack 8 besteht insbesondere aus auf Lithium basierenden Einzelzellen 6.

Arbeitet die Ansteuerschaltung 10 zwischen der Spannungsquelle 7 und dem Gleichstrommotor 1 ordnungsgemäß, ergeben sich die in Fig. 2 dargestellten Diagramme.

Das obere Diagramm in Fig. 2 zeigt den Zustand des Betriebsschalters 12; im Zustand "Aus" ist der Kontakt 11 offen; im Zustand "Ein" ist der Kontakt 11 geschlossen.

Bei geschlossenem Kontakt 11 wird die Versorgungsspannung U_{V} auf die Eingangsklemmen 13, 15 der Ansteuerschaltung geschaltet. Mit dem Anliegen der Spannung an die Ansteuerschaltung 10 wird diese initialisiert.

Die Initialisierung der Ansteuerschaltung 10 umfasst das ordnungsgemäße Hochlaufen eines in der Ansteuerschaltung angeordneten Mikroprozessors, das Abarbeiten von Prüfroutinen und das Einnehmen einer vorgegebenen, definierten elektrischen Ausgangsstellung. Diese Initialisierung der Ansteuerschaltung 10 benötigt 5 bis 500 Millisekunden.

Innerhalb eines Zeitfensters ΔT nach dem Beginn der Initialisierung der Ansteuerschaltung und vor der Inbetriebnahme des Gleichstrommotors 1 wird mittels der Prüfvorrichtung 20 das Potential 40 auf zumindest einem der Spannungsanschlüsse 4, 5 des Gleichstrommotors überprüft, wie es im unteren Diagramm in Fig. 2 dargestellt ist. Im gezeigten Ausführungsbeispiel wird das Potential 40 zwischen den Spannungsanschlüssen 4, 5 des Gleichstrommotors 1 abgefragt.

In der Darstellung der Fig. 2 gibt das untere Diagramm die Generatorspannung U (EMK) des Gleichstrommotors 1 zwischen den Spannungsanschlüssen 4 und 5 wieder. Das Potential 40 liegt unterhalb eines Grenzwertes 41; die Ansteuerschaltung 10 arbeitet korrekt.

Alternativ oder zusätzlich zur Überprüfung der rückwirkenden Generatorspannung U kann auch die Stromaufnahme I des Gleichstrommotors 1 überprüft werden, wie es im mittleren Diagramm in Fig. 2 dargestellt ist. Liegt die Stromaufnahme unterhalb eines Grenzwertes 43 innerhalb des Zeitfensters ΔT der Initialisierung der Ansteuerschaltung 10, arbeitet diese korrekt.

Fig. 2 zeigt, dass zum Zeitpunkt t₁ der Betriebsschalter 30 eingeschaltet wird und im Zeitfenster ΔT der Initialisierung bis zum Zeitpunkt t₂ weder das Potential der Generatorspannung U (EMK) einen vorgegebenen Grenzwert 41 übersteigt, noch eine über dem Grenzwert 43 liegende Stromaufnahme des Gleichstrommotors 1 gegeben ist. Die Ansteuerschaltung arbeitet ordnungsgemäß. Die Anzeige 30 wird nicht angesteuert.

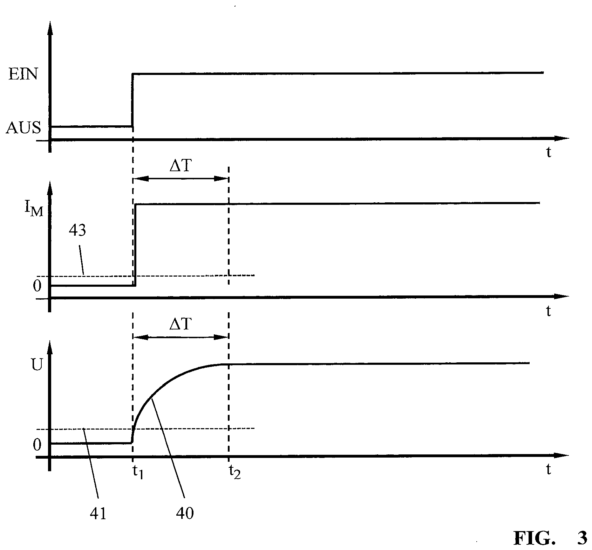

In der Darstellung nach Fig. 3 wird im Zeitpunkt t₁ der Betriebsschalter 12 eingeschaltet; mit dem Einschalten des Betriebsschalters 12 wird die Versorgungsspannung U_{V} an die Eingangsklemmen 13, 15 der Ansteuerschaltung 10 gelegt, worauf die Ansteuerschaltung ihre Initialisierung startet. Der Initialisierung ist das Zeitfenster ΔT bis zum Zeitpunkt t₂ zugeordnet. Mit dem Beginn der Initialisierung der Ansteuerschaltung 10 und vor der Inbetriebnahme des Gleichstrommotors 1 wird das Potential 40 auf dem Spannungsanschluss 4, 5 des Gleichstrommotors 1 überprüft. Wie Fig. 3 zeigt, ist innerhalb des Zeitfensters ΔT das Potential 40 der Generatorspannung über den Grenzwert 41 angestiegen. Da das Potential 40 oberhalb des Grenzwertes 41 liegt, steuert die Prüfvorrichtung 20 die Anzeige 30 an. Vorteilhaft ist die Anzeige eine optische Anzeige, insbesondere eine LED 31.

Wie in den Figuren 2 und 3 dargestellt, erfolgt die Überprüfung des Potentials der Generatorspannung U (EMK) innerhalb des Zeitfensters ΔT der Initialisierung. Es kann ausreichend sein, die Überprüfung über eine kleinere Zeitspanne als das Zeitfenster ΔT der Initialisierung auszuführen. Die kleinere Zeitspanne liegt dabei zweckmäßig innerhalb des Zeitfensters ΔT der Initialisierung, welches in einem Bereich von 5 bis 500 Millisekunden liegt.

Die Prüfvorrichtung 20 wird - ebenso wie die Ansteuerschaltung 10 - gleichzeitig mit dem Einschalten des Betriebsschalters 12 an die Versorgungspannung U_{V} angelegt und in Betrieb genommen.

Die Bestimmung des Grenzwertes 41 der Generatorspannung EMK kann zweckmäßig von einem beim Start des Gleichstrommotors 1 zulässigen Potentialverlauf abgeleitet werden. In gleicher Weise kann der Grenzwert 43 des zulässigen Motorstroms IM von einem zulässigen Stromverlauf bei einem Start des Gleichstrommotors 1 abgeleitet werden.

## Patentansprüche

1. Verfahren zur Überprüfung der Funktion einer elektronische Schaltglieder enthaltenden Ansteuerschaltung (10) eines Gleichstrommotors (1),
• wobei elektrische Spannungsanschlüsse (4, 5) des Gleichstrommotors (1) über die Ansteuerschaltung (10) mit einer Versorgungsspannung (U_{V}) einer Spannungsquelle (7) verbunden sind, und die Ansteuerschaltung (10) zum Betrieb des Gleichstrommotors (1) eine Betriebsspannung (U_{B}) einstellt,
• wobei die Versorgungsspannung (U_{V}) größer ist als die Betriebsspannung (U_{B}),
• und mit einem zwischen der Ansteuerschaltung (10) und der Spannungsquelle (7) angeordnetem Betriebsschalter (12) zur Inbetriebnahme der Ansteuerschaltung (10) und des Gleichstrommotors (1),
**gekennzeichnet durch die Verfahrensschritte:**
- Einschalten des Betriebsschalters (12) zu einem ersten Zeitpunkt (t₁),
- Initialisieren der elektronische Schaltglieder enthaltenden Ansteuerschaltung (10) mit dem Einschalten des Betriebsschalters (12) zum ersten Zeitpunkt (t₁),
- Überprüfen eines Potentials (40) auf einem Spannungsanschluss (4, 5) des Gleichstrommotors (1) innerhalb eines Zeitfensters (ΔT) **nach Beginn** der Initialisierung der Ansteuerschaltung (10) zum ersten Zeitpunkt (t₁) und vor der Inbetriebnahme des Gleichstrommotors (1),
- Ansteuern einer Anzeige (30), wenn bei der Überprüfung innerhalb des Zeitfensters (ΔT) ab dem ersten Zeitpunkt (t₁) der Initialisierung der Ansteuerschaltung (10) und vor der Inbetriebnahme des Gleichstrommotors (1) ein Potential (40) auf dem Spannungsanschluss (4, 5) des Gleichstrommotors (1) festgestellt wird, welches oberhalb eines vorgegebenen Grenzwertes (41) liegt.

2. Verfahren nach Anspruch 1,
**dadurch gekennzeichnet, dass** das Zeitfenster (ΔT) in einem Bereich von 5 bis 500 Millisekunden liegt.

3. Verfahren nach Anspruch 1,
**dadurch gekennzeichnet, dass** mit dem Einschalten des Betriebsschalters (12) eine Prüfvorrichtung (20) zur Erfassung des Potentials (40) auf dem Spannungsanschluss (4, 5) in Betrieb genommen wird.

4. Verfahren nach Anspruch 1,
**dadurch gekennzeichnet, dass** der Grenzwert (41) von einem bei einem Start des Gleichstrommotors (1) zulässigen Potentialverlauf abgeleitet ist.

5. Verfahren nach Anspruch 1,
**dadurch gekennzeichnet, dass** als Anzeige (30) eine optische Anzeige angesteuert wird.

6. Vorrichtung zur Überprüfung der Funktion einer elektronische Schaltglieder enthaltenden Ansteuerschaltung (10) eines Gleichstrommotors (1), wobei elektrische Spannungsanschlüsse (4, 5) des Gleichstrommotors (1) über die Ansteuerschaltung (10) mit einer Versorgungsspannung (U_{V}) einer Spannungsquelle (7) verbunden sind, und die Ansteuerschaltung (10) zum Betrieb des Gleichstrommotors (1) eine Betriebsspannung (U_{B}) einstellt, wobei die Versorgungsspannung (U_{V}) größer ist als die Betriebsspannung (U_{B}), und mit einem zwischen der Ansteuerschaltung (10) und der Spannungsquelle (7) angeordneten Betriebsschalter (12) zur Inbetriebnahme der Ansteuerschaltung (10) und des Gleichstrommotors (1),
**dadurch gekennzeichnet, dass** eine Prüfvorrichtung (20) zur Erfassung des Potentials (40) auf dem Spannungsanschluss (4, 5) des Gleichstrommotors (1) innerhalb eines Zeitfensters (ΔT) nach Beginn der Initialisierung der Ansteuerschaltung (10) zu einem ersten Zeitpunkt (t₁) und vor der Inbetriebnahme des Gleichstrommotors (1) vorgesehen ist, wobei die Prüfvorrichtung (20) mit zumindest einer Messleitung (21, 22) mit einem Spannungsanschluss (4, 5) des Gleichstrommotors (1) verbunden ist, und dass die Prüfvorrichtung (20) eine Anzeige (30) ansteuert, wenn das auf der Messleitung (21, 22) anliegende Potential (40) innerhalb des Zeitfensters (ΔT) ab dem ersten Zeitpunkt (t₁) der Initialisierung der Ansteuerschaltung (10) und vor der Inbetriebnahme des Gleichstrommotors (1) oberhalb eines vorgegebenen Grenzwertes (41) liegt.

7. Vorrichtung nach Anspruch 6,
**dadurch gekennzeichnet, dass** die Prüfvorrichtung (20) und die Ansteuervorrichtung (10) in einem gemeinsamen Gehäuse (25) und insbesondere auf einer gemeinsamen Platine (24) angeordnet sind.

8. Vorrichtung nach Anspruch 6,
**dadurch gekennzeichnet, dass** die Versorgungsspannung (U_{V}) der Spannungsquelle (7) größer ist als die zulässige Betriebsspannung (U_{B}) des Gleichstrommotors (1).

9. Vorrichtung nach Anspruch 6,
**dadurch gekennzeichnet, dass** die Anzeige (30) eine optische Anzeige, insbesondere eine LED (31) ist.

10. Vorrichtung nach Anspruch 6,
**dadurch gekennzeichnet, dass** die Spannungsquelle (7) ein Akkupack (8) ist, insbesondere ein Akkupack (8) aus auf Lithium basierenden Einzelzellen (6) ist.

## Claims

1. Method for checking the operation of a control circuit (10), containing electronic switching elements, for a DC motor (1),
• wherein electrical voltage connections (4, 5) of the DC motor (1) are connected to a supply voltage (U_{V}) of a voltage source (7) via the control circuit (10), and the control circuit (10) sets an operating voltage (U_{B}) for operating the DC motor (1),
• wherein the supply voltage (U_{V}) is higher than the operating voltage (U_{B}),
• and having an operating switch (12) arranged between the control circuit (10) and the voltage source (7) for starting up the control circuit (10) and the DC motor (1),
**characterized by** the method steps of:
- switching on the operating switch (12) at a first time (t₁),
- initializing the control circuit (10) containing electronic switching elements when the operating switch (12) is switched on at the first time (t₁),
- checking a potential (40) on a voltage connection (4, 5) of the DC motor (1) within a time window (ΔT) after the beginning of initialization of the control circuit (10) at the first time (t₁) and before startup of the DC motor (1),
- actuating a display (30) if, during the check, within the time window (ΔT) from the first time (t₁) of initialization of the control circuit (10) and before startup of the DC motor (1), a potential (40) on the voltage connection (4, 5) of the DC motor (1) is determined that is above a predefined limit value (41).

2. Method according to claim 1,
**characterized in that** the time window (ΔT) is in a range from 5 to 500 milliseconds.

3. Method according to claim 1,
**characterized in that** a test apparatus (20) for capturing the potential (40) on the voltage connection (4, 5) is started up when the operating switch (12) is switched on.

4. Method according to claim 1,
**characterized in that** the limit value (41) is derived from a potential characteristic admissible when the DC motor (1) starts.

5. Method according to claim 1,
**characterized in that** the display (30) actuated is a visual display.

6. Apparatus for checking the operation of a control circuit (10), containing electronic switching elements, for a DC motor (1), wherein electrical voltage connections (4, 5) of the DC motor (1) are connected to a supply voltage (Uv) of a voltage source (7) via the control circuit (10), and the control circuit (10) sets an operating voltage (U_{B}) for operating the DC motor (1), wherein the supply voltage (U_{V}) is higher than the operating voltage (U_{B}), and having an operating switch (12) arranged between the control circuit (10) and the voltage source (7) for starting up the control circuit (10) and the DC motor (1), **characterized in that** there is provision for a test apparatus (20) for capturing the potential (40) on the voltage connection (4, 5) of the DC motor (1) within a time window (ΔT) after the beginning of initialization of the control circuit (10) at a first time (t₁) and before startup of the DC motor (1), wherein the test apparatus (20) is connected to a voltage connection (4, 5) of the DC motor (1) by means of at least one measuring line (21, 22), and **in that** the test apparatus (20) actuates a display (30) if the potential (40) that is present on the measuring line (21, 22) is above a predefined limit value (41) within the time window (ΔT) from the first time (t₁) of initialization of the control circuit (10) and before startup of the DC motor (1).

7. Apparatus according to claim 6,
**characterized in that** the test apparatus (20) and the control apparatus (10) are arranged in a common housing (25) and in particular on a common circuit board (24).

8. Apparatus according to claim 6,
**characterized in that** the supply voltage (U_{V}) of the voltage source (7) is higher than the admissible operating voltage (U_{B}) of the DC motor (1).

9. Apparatus according to claim 6,
**characterized in that** the display (30) is a visual display, in particular an LED (31).

10. Apparatus according to claim 6,
**characterized in that** the voltage source (7) is a battery pack (8), in particular a battery pack (8) comprising lithium-based single cells (6).

## Revendications

1. Procédé de vérification du fonctionnement d'un circuit de commande (10), contenant des éléments de commutation électroniques, d'un moteur à courant continu (1),
• les bornes de tension électrique (4, 5) du moteur à courant continu (1) étant reliées à une tension d'alimentation (U_{V}) d'une source de tension (7) par le biais du circuit de commande (10), et le circuit de commande (10) réglant une tension de fonctionnement (U_{B}) pour faire fonctionner le moteur à courant continu (1),
• la tension d'alimentation (Uv) étant supérieure à la tension de fonctionnement (U_{B}),
• et ce à l'aide d'un commutateur de fonctionnement (12) disposé entre le circuit de commande (10) et la source de tension (7) et destiné à mettre en service le circuit de commande (10) et le moteur à courant continu (1),
**caractérisé par** les étapes de procédé suivantes :
- enclencher le commutateur de commande (12) à un premier instant (t₁),
- initialiser le circuit de commande (10), contenant des éléments de commutation électroniques, avec l'enclenchement de l'interrupteur de commande (12) au premier instant (t₁),
- vérifier un potentiel (40) à une borne de tension (4, 5) du moteur à courant continu (1) dans une fenêtre temporelle (ΔT) après le début de l'initialisation du circuit de commande (10) au premier instant (t₁) et avant la mise en service du moteur à courant continu (1),
- commander un afficheur (30) lorsqu'un potentiel (40), supérieur à une valeur limite spécifiée (41), est constaté sur la borne de tension (4, 5) du moteur à courant continu (1) lors de la vérification dans la fenêtre temporelle (ΔT) à partir du premier instant (t₁) de l'initialisation du circuit de commande (10) et avant la mise en service du moteur à courant continu (1).

2. Procédé selon la revendication 1,
**caractérisé en ce que** la fenêtre temporelle (ΔT) est située dans une plage de 5 à 500 millisecondes.

3. Procédé selon la revendication 1,
**caractérisé en ce que**, lorsque le commutateur de commande (12) est enclenché, un dispositif de test (20) est mis en service pour détecter le potentiel (40) sur la borne de tension (4, 5).

4. Procédé selon la revendication 1,
**caractérisé en ce que** la valeur limite (41) est dérivée d'une variation de potentiel autorisée lors d'un démarrage du moteur à courant continu (1).

5. Procédé selon la revendication 1,
**caractérisé en ce que** l'afficheur (30) commandé est un afficheur optique.

6. Dispositif de vérification du fonctionnement d'un circuit de commande (10), contenant des éléments de commutation électroniques, d'un moteur à courant continu (1), les bornes de tension électrique (4, 5) du moteur à courant continu (1) étant reliées à une tension d'alimentation (U_{V}) d'une source de tension (7) par le biais du circuit de commande (10), et le circuit de commande (10) réglant une tension de fonctionnement (U_{B}) pour faire fonctionner le moteur à courant continu (1), la tension d'alimentation (U_{V}) étant supérieure à la tension de fonctionnement (U_{B}), et ce avec un commutateur de fonctionnement (12) disposé entre le circuit de commande (10) et la source de tension (7) et destiné à mettre en service le circuit de commande (10) et le moteur à courant continu (1), **caractérisé en ce qu'**un dispositif de test (20) est prévu pour détecter le potentiel (40) sur la borne de tension (4, 5) du moteur à courant continu (1) dans une fenêtre de temps (ΔT) après le début de l'initialisation du circuit de commande (10) à un premier instant (t₁) et avant la mise en service du moteur à courant continu (1), le dispositif de test (20) étant relié par au moins une ligne de mesure (21, 22) à une borne de tension (4, 5) du moteur à courant continu (1), et **en ce que** le dispositif de test (20) commande un afficheur (30) lorsque le potentiel (40), appliqué sur la ligne de mesure (21, 22), est supérieur à une valeur limite spécifiée (41) dans la fenêtre temporelle (ΔT) à partir du premier instant (t₁) de l'initialisation du circuit de commande (10) et avant la mise en service du moteur à courant continu (1).

7. Dispositif selon la revendication 6,
**caractérisé en ce que** le dispositif de test (20) et le dispositif de commande (10) sont disposés dans un boîtier commun (25) et en particulier sur une carte de circuit imprimé commune (24).

8. Dispositif selon la revendication 6,
**caractérisé en ce que** la tension d'alimentation (U_{V}) de la source de tension (7) est supérieure à la tension de fonctionnement autorisée (U_{B}) du moteur à courant continu (1).

9. Dispositif selon la revendication 6,
**caractérisé en ce que** l'afficheur (30) est un afficheur optique, en particulier une LED (31).

10. Dispositif selon la revendication 6,
**caractérisé en ce que** la source de tension (7) est un bloc-batterie (8), en particulier un bloc-batterie (8) comprenant des cellules individuelles (6) à base de lithium.
